# EUROPÄISCHE PATENTANMELDUNG

(11) **EP 4 230 896 A1**
(43) Veröffentlichungstag der Anmeldung: **23.08.2023**
(21) Anmeldenummer: 23157762.8
(22) Anmeldetag: 21.02.2023
(51) Int. Cl.: F16H 25/20, F16F 1/02

(54) **SPINDELBAUGRUPPE FÜR EINE SPINDELANTRIEBSVORRICHTUNG**

(30) Priorität: 22.02.2022 DE 102022104079
(71) Anmelder: U-Shin Deutschland Zugangssysteme GmbH, 85253 Erdweg (DE)
(72) Erfinder: Kummer, Frank, 86150 Augsburg (DE); Lejeune, Nicolas, 84036 Landshut (DE)
(74) Vertreter: Riebling, Peter

(57) **Zusammenfassung**

Die Erfindung betrifft Spindelbaugruppe für eine Spindelantriebsvorrichtung (10) umfassend ein Schubrohr (30) und eine Spindelmutter (32), die am Schubrohr (30) drehfest angeordnet ist, wobei die Spindelmutter (32) mit einer Spindel (26) der Spindelantriebsvorrichtung (10) in Gewindeeingriff bringbar ist, und wobei auf der Spindel (26) ein Endanschlag für die Spindelmutter (32) angeordnet ist, wobei der Endanschlag ein Dämpfungselement (36) umfasst, das aus einem federelastisch ausgebildeten und hohlzylindrisch geformten Stanzteil (60) besteht.

## Beschreibung

Die Erfindung betrifft eine Spindelbaugruppe für eine Spindelantriebsvorrichtung nach dem Oberbegriff des Patentanspruchs 1.

Um Türen, Klappen oder Hauben eines Kraftfahrzeugs automatisch und kontrolliert zu öffnen und zu schließen werden beispielsweise elektrische Antriebe in Kombination mit passiven Bauelementen, wie z. B. Gasdruckfedern verwendet.

Die elektrischen Antriebe umfassen oftmals Spindelantriebsvorrichtungen, welche in der Regel einen elektrischen Spindelantrieb aufweisen, mittels welchem die zugeordnete Fahrzeugklappe geöffnet und/oder geschlossen werden kann.

Ein Nutzer eines zugehörigen Fahrzeugs muss also das Öffnen und Schließen nicht mehr manuell vornehmen. Er muss lediglich einen Befehl zum Öffnen oder Schließen an die Spindelantriebsbaugruppe absenden, was er beispielsweise über eine Funkfernbedienung oder über einen im Fahrzeug angeordneten Schalter tun kann.

Um eine Längenänderung der Spindelantriebsvorrichtung zu ermöglichen, wird eine von einer Motorgetriebeeinheit angetriebene Spindel gedreht, die in eine Spindelmutter eingreift. Die Spindelmutter selbst wird dabei von einem Schubrohr translatorisch und rotatorisch fixiert.

Um zu verhindern, dass sich die Spindelmutter über das freie Ende der Spindel hinausbewegen kann, ist am freien Ende der Spindel üblicherweise ein Endanschlag vorgesehen, welcher gleichzeitig auch als Führungselement für die Spindel im Schubrohr dient.

Die DE 10 2017 127 859 A1 zeigt eine Spindelantriebsvorrichtung für ein Verschlusselement eines Kraftfahrzeugs, wobei am Ende der Spindel ein Endanschlag in Form einer Dämpfungseinrichtung vorgesehen ist.

Die Dämpfungseinrichtung schützt die Motorgetriebeeinheit zum Antrieb der Spindel vor übermäßiger Belastung. Das Dämpfungselement ist als hülsenförmiges Kunststoffteil ausgebildet, dass sich bei Krafteinwirkung plastisch verformt.

Ein Endanschlag mit einem ähnlichen Dämpfungselement ist aus der WO 2015 032 554 A1 bekannt.

Die bekannten Dämpfungselemente werden beim Aufprall auf die Spindelmutter plastisch verformt, sodass die Aufprallenergie größtenteils absorbiert wird.

Allerdings tritt diese Aufprallsituation normalerweise im Normalbetrieb der Antriebsvorrichtung nicht ein, sondern nur im Falle einer Missbrauchssituation, beim Einbau in das Kraftfahrzeug oder eines Defekts, wobei eine plastische Verformung des Dämpfungselements größtenteils nicht rückgängig gemacht werden kann, und das Dämpfungselement in einem Schadensfall ausgetauscht werden sollte.

Insbesondere ist die Ausgestaltung des auf der Spindel angeordneten Dämpfungselements Gegenstand der Erfindung.

Es ist die Aufgabe der Erfindung, bei einer Spindelbaugruppe für eine Spindelantriebsvorrichtung den Endanschlag der Spindel zu verbessern.

Die Aufgabe wird durch eine Spindelbaugruppe und einen der Spindelbaugruppe zugeordneten Endanschlag mit den Merkmalen des Patentanspruchs 1 gelöst.

Bevorzugte Ausgestaltungen der Erfindung und weitere vorteilhafte Merkmale sind in den Unteransprüchen angegeben.

Die beschriebene Spindelbaugruppe für eine Spindelantriebsvorrichtung umfasst ein Schubrohr und eine Spindelmutter, die am Schubrohr drehfest angeordnet ist, wobei die Spindelmutter mit einer Spindel der Spindelantriebsvorrichtung im Gewindeeingriff bringbar ist und wobei auf der Spindel ein Endanschlag für die Spindelmutter angeordnet ist.

Erfindungsgemäß umfasst der Endanschlag ein Dämpfungselement, das aus einem Stanzteil besteht, das hohlzylindrisch geformt ist und federelastische Eigenschaften aufweist. Der Endanschlag ist bevorzugt aus einem gestanzten Federstahlblech gefertigt und hat die Funktion einer elastischen Federstahlhülse. Das Dämpfungselement kann daher auch als Rohrfeder bezeichnet werden.

Im Gegensatz zu den aus dem Stand der Technik bekannten Dämpfungselementen tritt im Belastungsfall eine elastische Verformung des Dämpfungselements ein, so dass sich das Dämpfungselement nicht plastisch verformt und dadurch beschädigt oder zerstört wird, sondern von allein wieder seine ursprüngliche Form annimmt.

Dieses Stanzteil ist einfach und kostengünstig in der Herstellung und einfach zu montieren.

Es ergibt sich damit ein federelastisch dämpfender Endanschlag für den Spindelantrieb, welcher wesentliche Vorteile gegenüber den bisher bekannten Dämpfungselementen mit plastischer Verformung aufweist.

In einer bevorzugten Ausgestaltung der Erfindung ist das Dämpfungselement lose mittels einer Spielpassung auf der Spindel an einer definierten Position angeordnet, d. h. im Belastungsfall ist es auf der Spindel axial verschieblich. Das Dämpfungselement bzw. das Stanzteil weist bezüglich seiner in vertikaler Richtung gerichteten axialen Längserstreckung mehrere, sich in Umfangsrichtung erstreckende längliche - bevorzugt horizontale - Ausnehmungen auf, die in mehreren Reihen in Umfangsrichtung des Stanzteils verlaufend und versetzt zueinander angeordnet sind. Dadurch bilden sich eine Reihe von Festkörperfedern aus. Zwischen den versetzt angeordneten Ausnehmungen verbleiben Stege, die im Belastungsfall die Kraft von einer in die andere Festkörperfeder übertragen. Die Summe dieser einzeln gestalteten Festkörperfedern geben dem Dämpfungselement seine federelastischen Eigenschaften.

Durch die mehreren Reihen von Ausnehmungen in dem zylindrisch gebogenen Stanzteil ergibt sich ein federelastisches Element in der Art einer Federbüchse oder Rohrfeder, das ähnliche federnde Eigenschaften aufweist wie mehrere aufeinander gestapelte Tellerfedern oder gleichwirkende Biegefedern.

Die Ausnehmungen des Stanzteils haben vorzugsweise eine spannungsoptimierte hantelförmige oder knochenförmige Ausgestaltung.

Eine solche knochenförmige Aussparung besteht bevorzugt aus zwei im Abstand im Blechmaterial ausgestanzten, horizontal gegenüberliegenden Halbkreisbögen, deren Begrenzungsseiten durch einen ausgestanzten Mittenbereich miteinander verbunden sind. Der Mittenbereich ist knochenförmig eingezogen, weil dessen gegenüberliegende Randseiten einen geringeren Abstand aufweisen als vergleichsweise der Radius der endseitigen Halbkreisbögen. Dadurch ergibt sich die charakteristische Knochenform der Ausnehmungen. Bei Einwirkung eines in vertikaler Richtung gerichteten Kraftvektors auf die Federstruktur des Dämpfungselementes wirken die den Mittenbereich der Aussparungen ausbildenden Blechstrukturen jeweils als Biegefeder, weil sich der Mittenbereich der Aussparung elastisch federnd verformt.

Die knochenförmige Ausgestaltung der aus dem Federstahlblech ausgestanzten Ausnehmungen hat den Vorteil, dass in der geschlitzten Federbüchse eine Vielzahl von in horizontaler Richtung am Umfang verteilt angeordneter Biegefedern entsteht, die in vertikaler Richtung übereinander gestapelt sind. Dadurch ergibt sich eine symmetrische Biegestruktur, ohne dass die Gefahr der Verkantung des Dämpfungselements und einer asymmetrischen Belastung besteht.

Zum weiteren Schutz gegen Verkantung kann es in einer zweiten Ausführungsform der Erfindung vorgesehen sein, dass das hülsenförmige, geschlitzte Dämpfungselement jeweils stirnseitig einen den Durchmesser vergrössernden Bördelrand aufweist. Der Bördelrand ist aus dem Material des Federstahlblechs gebildet und ist im Winkel von etwa 90 Grad zur Längsmittenachse des Dämpfungselements abgekantet. Damit kann eine an den Stirnseiten des Dämpfungselements anliegende Scheibe vergrößerten Durchmessers entfallen, die in der ersten Ausführungsform zur symmetrischen Krafteinleitung auf den geschlitzten Hülsenkörper vorgesehen ist.

Beide Ausführungsformen sehen vor, dass die sich zu einer Hülse vereinigenden Längsseiten des Federstahlblechs einen in vertikaler Richtung verlaufenden Spalt bilden. Die Längsseiten können sich in dieser Ausführung nur berühren, sind aber nicht miteinander verbunden.

In einer zweiten Ausgestaltung eines solchen vertikalen Spalts kann es vorgesehen sein, im vertikalen Abstand zueinander angeordnete Punktschweißverbindungen zwischen den sich gegenüberliegenden Längsseiten des Federstahlblechs vorzusehen.

In einer dritten Ausgestaltung kann es vorgesehen sein, den in Längsrichtung sich erstreckenden Spalt zwischen den beiden gegenüberliegenden Ende des Federstahlblechs zu überbrücken. In diesem Fall ist das Dämpfungselement als Wickelkörper ausgebildet und besteht bevorzugt aus mindestens zwei sich gegenseitig überlappenden Wicklungen, nämlich einer Innenwicklung und einer die Innenwicklung überdeckenden Außenwicklung. Die Wickelstruktur ist bevorzugt so ausgebildet, dass die innere Längsseite der Innenwicklung der äußeren Längsseite der Außenwicklung gegenüberliegt, sodass sich bei vertikaler Krafteinwirkung auf den hülsenförmigen Federkörper eine gleichmässige Verformung aller durch die Randseiten der Aussparungen gebildeten Biegefedern ergibt.

Schließlich kann in einer vierten Ausgestaltung bezüglich der Ausbildung des vertikalen Spaltes vorgesehen sein, dass mehrere, den Spalt überbrückende Laschenverbindungen zwischen den sich gegenüberliegenden vertikalen Längsseiten des Blechstreifens vorgesehen sein können.

Bezüglich der Gestaltung des vertikalen Längsspalts können die oben beschriebenen vier Ausführungsformen in jeder beliebigen Konstellation einzeln oder zu mehreren miteinander kombiniert werden.

An dem - dem Spindelmotor zugewandten - Ende des Dämpfungselementes ist das Ende durch eine Anlaufscheibe abgeschlossen, die ebenfalls beweglich auf der Spindel angeordnet ist und an welcher die Spindelmutter ggf. anschlägt.

Am anderen Ende des Dämpfungselementes grenzt ein Lagerelement an, welches am Innenumfang des Schubrohres verschieblich anliegt.

Die gesamte Anordnung des Endanschlags umfassen die Anlaufscheibe, das Dämpfungselement und das Lagerelement und wird durch eine Befestigungsscheibe an der Spindel fixiert.

Die erfindungsgemäße Spindelbaugruppe ist Teil einer Spindelantriebsvorrichtung, wie sie beispielsweise zum Bewegen von Türen, Klappen oder Hauben eines Kraftfahrzeugs verwendet werden kann.

Mehrere Ausführungsbeispiele der Erfindung werden nachfolgend anhand der Zeichnungen näher erläutert. Hierbei ergeben sich weitere Merkmale und Vorteile der Erfindung.
- Figur 1: zeigt einen Schnitt durch eine Spindelantriebsvorrichtung, in welcher die erfindungsgemäße Spindelbaugruppe verwendet wird.
- Figur 2: zeigt einen vergrößerten Schnitt der Spindeleinheit.
- Figur 3: zeigt eine Ansicht des Endanschlags auf der Spindel.
- Figur 4: zeigt einen Längsschnitt durch den Endanschlag und die Spindel.
- Figur 5: zeigt ein Stanzteil zur Herstellung eines Dämpfungselements.
- Figur 6: zeigt eine Seitenansicht des Dämpfungselements bestehend aus dem zylindrisch gerollten Stanzteil.
- Figur 7: zeigt eine perspektivische Ansicht des Dämpfungselements bestehend aus dem zylindrisch gerollten Stanzteil.
- Figur 8: zeigt eine ähnliche Darstellung wie Figur 5 mit Erläuterung der Federfunktion
- Figur 9a und Figur 9b: zeigen die Funktion der durch die Aussparung im Federblech gebildeten Biegefedern
- Figur 10: zeigt eine abgewandelte zweite Ausführungsform eines Dämpfungselements mit stirnseitigen Bördelrändern
- Figur 11: zeigt eine abgewandelte dritte Ausführungsform eines Dämpfungselements als hohlzylindrischer Wickelkörper aus einem Federblechstreifen
- Figur 12: zeigt eine vergrößerte Detailansicht einer den vertikalen Spalt überbrückenden Laschenverbindung

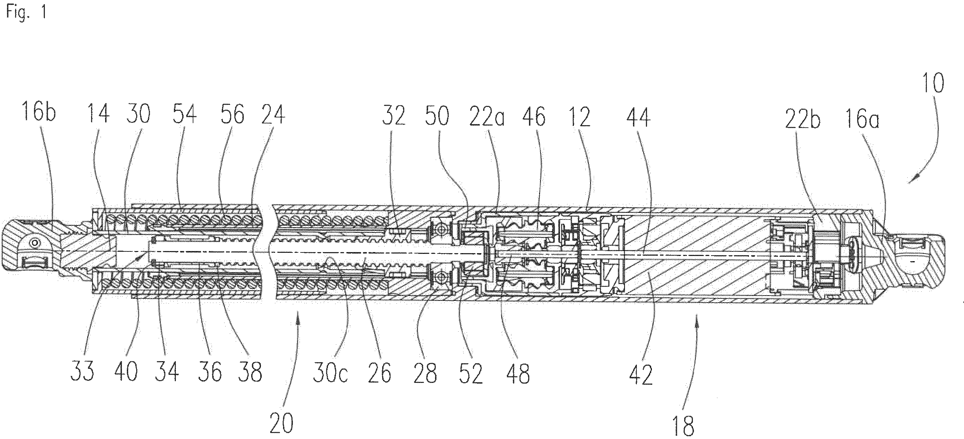

Figur 1 zeigt eine Spindelantriebsvorrichtung 10, vorzugsweise zum motorischen Öffnen und Schließen einer Fahrzeugklappe (nicht dargestellt).

Die Spindelantriebsvorrichtung 10 umfasst ein Spindelgehäuse 12, das sich entlang einer Spindelachse 14 erstreckt, und ein erstes Endstück 16a, welches beispielsweise an der Fahrzeugkarosserie befestigt wird, und ein zweites Endstück 16b, das mit der zu betätigenden Fahrzeugklappe verbunden wird.

Im Spindelgehäuse 12 sind eine Motorgetriebeeinheit 18 und eine Spindeleinheit 20 angeordnet.

In der dargestellten Ausführungsform ist die Motorgetriebeeinheit 18 über zwei Lagerelemente 22a, 22b drehfest im Spindelgehäuse 12 gelagert.

Die Spindeleinheit 20 umfasst ein Führungsrohr 24, in welchem eine Spindel 26 gelagert ist. An ihrem der Motorgetriebeeinheit 18 zugewandten Ende ist die Spindel 26 vorzugsweise mittels eines Wälzlagers 28 im Führungsrohr 24 drehbar gelagert.

In der gezeigten Ausführungsform ist das Führungsrohr 24 am Spindelgehäuse 12 befestigt, beispielsweise mit dem Spindelgehäuse verklebt oder verschweißt.

Zwischen dem Führungsrohr 24 und der Spindel 26 ist ein Schubrohr 30 angeordnet, das mittels einer im Schubrohr 30 axial- und drehfest angeordneten Spindelmutter 32 mit der Spindel 26 gekoppelt ist.

Die Spindel 26 ist an ihrem freien Ende mittels einer Lageranordnung 33 im Schubrohr 30 drehbar gelagert und axial geführt. Die Lageranordnung 33 dient ferner als Endanschlag für die Spindelmutter 32, mit welchem eine axiale Bewegung der Spindelmutter 32 auf der Spindel 26 begrenzt wird, sodass sich die Spindelmutter 32 nicht über das freie Ende der Spindel 26 hinausbewegen kann.

Die Lageranordnung 33 umfasst vorzugsweise ein Lagerelement 34 und ein elastisch verformbares Dämpfungsbauteil 36, die zwischen einer der Spindelmutter 32 zugewandten Anlaufscheibe 38 und einer Befestigungsscheibe 40 angeordnet ist und auf der Spindel 26 angeordnet sind.

Die Motorgetriebeeinheit 18 umfasst einen Antriebsmotor 42 mit einer Motorwelle 44, welche über eine Kreuzscheibenkupplung eine Getriebewelle 48 antreibt, an deren Abtrieb über ein Umlaufrädergetriebe 46 ein Hohlrad 50 vorgesehen ist, das über eine Kupplung 52 mit der Spindel 26 drehgekoppelt ist. Das Hohlrad 50 ist im Spindelgehäuse 12 oder einem nicht näher beschriebenen Getriebegehäuse drehbar gelagert.

Die Spindelmutter 32 ist an einem Ende des Schubrohres 30 befestigt. Die Spindelmutter 32 ist vorzugsweise aus Kunststoff gefertigt und ist mit dem metallischen Schubrohr 30 axial- und drehfest verbunden.

Das andere Ende des Schubrohres 30 ist über das Endstück 16b mit einem Gehäuserohr 54 verbunden.

Wenn die Spindel 26 durch die Motorgetriebeeinheit 18 gedreht wird, führen die Spindelmutter 32 und das damit verbundene Schubrohr 30 eine Translationsbewegung entlang der Spindel 26 aus. Somit bewegen sich das Schubrohr 30 und das damit verbundene Gehäuserohr 54 teleskopartig relativ zu dem Spindelgehäuse 12, um die Fahrzeugklappe von einer ersten in eine zweite Stellung zu bewegen.

In dem Gehäuserohr 54 ist eine Schraubendruckfeder 56 zur Kraftunterstützung des Spindelantriebs 20 beim Ausfahren des Gehäuserohres 54 angeordnet.

Die Schraubendruckfeder 56 umgibt das Führungsrohr 24 und ist an einem Ende an einem Anschlag am Führungsrohr 24 und am anderen Ende am Gehäuserohr 54 abgestützt.

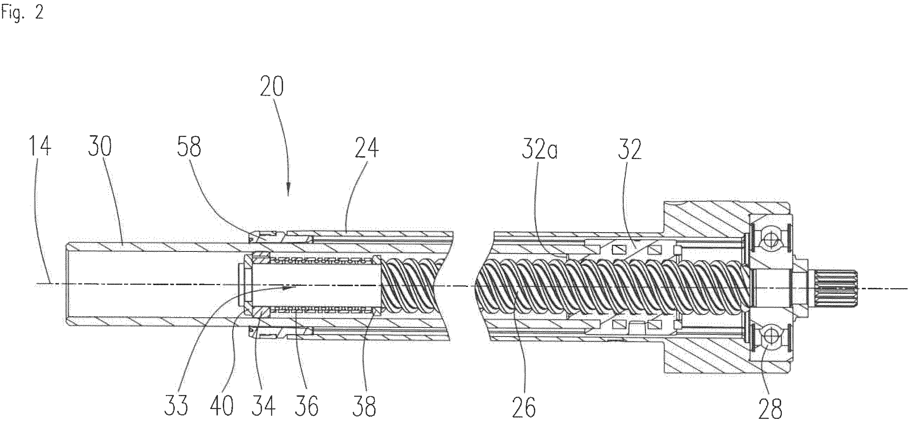

Figur 2 zeigt einen vergrößerten Schnitt durch die Spindeleinheit, insbesondere jeweils im Bereich der Enden der Spindel 26.

An ihrem hinteren Ende ist die Spindel 26 mittels eines Wälzlagers 28 in dem Führungsrohr 24 drehbar gelagert und wird durch die Motorgetriebeeinheit 18 (Figur 1) drehend angetrieben.

Die Spindelmutter 32 greift in das Gewinde der Spindel 26 ein und ist fest mit dem Schubrohr 30 verbunden.

Wenn sich die Spindel 26 dreht, bewegt sich die Spindelmutter 32 linear, geführt durch das Führungsrohr 24 entlang der Spindelachse 14, sodass das Schubrohr 30 sich ebenfalls relativ zum Führungsrohr 24 linear bewegt.

Am vorderen Ende des Führungsrohrs 24 ist eine Führungshülse 58 zur Führung des Schubrohrs 30 angeordnet. Ferner dichtet die Führungshülse 58 das Schubrohr 30 gegen Umwelteinflüsse oder Verschmutzung ab.

Am vorderen freien Ende der Spindel 26 ist ein Endanschlag mit einem Dämpfungselement 36 vorgesehen.

Der Endanschlag ist mittels der Befestigungsscheibe 40 fest auf der Spindel 26 fixiert.

An der Befestigungsscheibe 40 liegt ein Lagerelement 34 an, welches an der inneren Umfangsfläche des Schubrohrs 30 gleitend anliegt. Bei Drehung der Spindel 26 und der dadurch hervorgerufenen translatorischen Bewegung des Schubrohres 30 gleitet das Schubrohr 30 am Lagerelement 34 entlang.

Am Lagerelement 34 liegt das Dämpfungselement 36 an, welches am anderen Ende durch eine Anlaufscheibe 38 begrenzt wird.

Das Dämpfungselement 36 und die Anlaufscheibe 38 sind lose auf der Spindel 26 angeordnet und werden in der Zeichnung linksseitig lediglich durch das Lagerelement 34 und die am Ende der Spindel 26 befestigte Befestigungsscheibe 40 fixiert.

Bei Drehung der Spindel 26 bewegt sich die Spindelmutter 32 entweder nach links oder rechts entlang der Spindel 26 solange, bis sie am linksseitigen Ende der Spindel 26 mit ihrer Stirnseite 32a auf die Anlaufscheibe 38 trifft und die Drehung der Spindel elektronisch abgeschaltet wird.

In diesem Zustand liegt also die Stirnseite 32a der Spindelmutter 32 an der Anlaufscheibe 38 des Endanschlags an und es können durch das Dämpfungselement 36 insbesondere auf das Schubrohr 30 einwirkende axiale Kräfte abgefangen werden, die beispielsweise durch eingeleitete Kräfte durch einen Benutzer hervorgerufen werden. Ein anderes durch das Dämpfungselement 36 aufgenommenes Überlastereignis ist, wenn z. B. die Spindelmutter mit zu hoher Geschwindigkeit oder einer zu hohen Kraft auf den Endanschlag trifft.

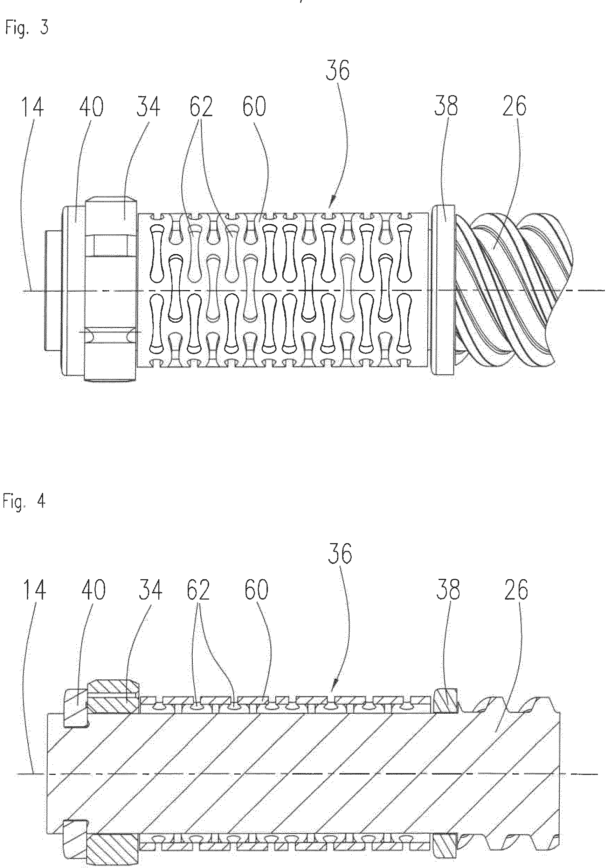

Die Figur 3 zeigt eine vergrößerte Ansicht des Endanschlags, insbesondere des Dämpfungselements 36 und Figur 4 zeigt einen Längsschnitt durch das Dämpfungselement 36 auf der Spindel 26.

Man erkennt hier, dass das Dämpfungselement 36 vorzugsweise aus einem zylindrisch gebogenen Stanzteil 60 besteht, welches in Umfangsrichtung eine Vielzahl von zueinander versetzt angeordneten Ausnehmungen 62 aufweist. Zwischen den Ausnehmungen verbleiben Stege, die in axialer Richtung, also in Richtung der Spindelachse 14, auftretende Kräfte übertragen und die Ausnehmungen elastisch verformbar sind.

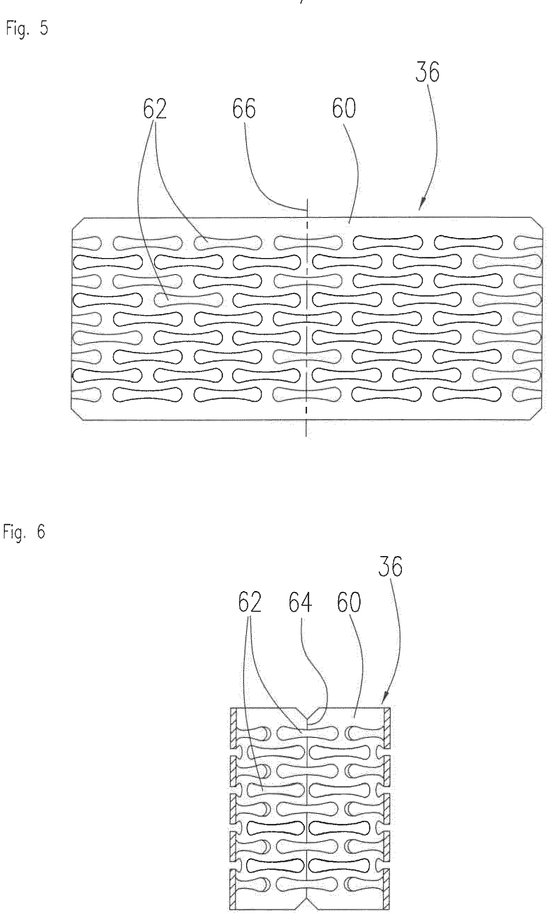

Wie die Figur 5 insbesondere zeigt, besteht das Dämpfungselement 36 aus einem etwa rechteckigen Stanzteil 60 aus Stahl, aus welchem mehrere in Reihen übereinander und versetzt angeordneten Ausnehmungen 62 ausgestanzt sind.

Diese Ausnehmungen 62 weisen vorzugsweise eine spannungsoptimierte knochenförmige oder hantelförmige Formgebung auf.

Das flache Stanzteil 60 wird entlang der Längsseiten gerollt, so dass sich ein hohlzylindrisches Dämpfungselement 36 ergibt, wie es in Figur 6 dargestellt ist.

Die aneinander anstoßenden Kanten des gerollten Stanzteils 60 werden vorzugsweise nicht fest miteinander verbunden, sondern es verbleibt ein Spalt 64. Alternativ können die aneinander anstoßenden Kanten etwa mittels (Laser-) Schweißen miteinander verbunden werden. Die länglichen Ausnehmungen 62 verlaufen mit ihrer längeren Seite in Umfangsrichtung des Dämpfungselements 36. Es sind mehrere entlang der Längsmittelachse 66 übereinander angeordneten Reihen von Ausnehmungen 62 vorgesehen, wobei die Ausnehmungen 62 jeder Reihe in Bezug auf die Ausnehmungen 62 der benachbarten Reihen versetzt angeordnet sind. Ferner ist bekannt, dass die gestanzten Lagen übereinander gewickelt werden können, um die abbildbaren Federkräfte in kleinen Bauräumen weiter zu erhöhen.

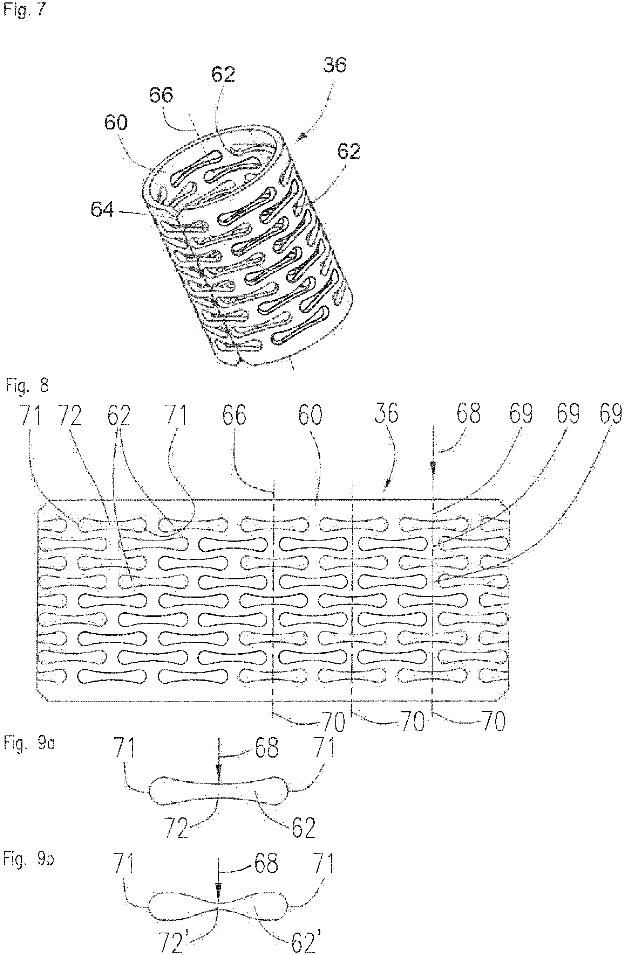

Das Dämpfungselement 36 hat auf Grund der Vielzahl der versetzten zueinander angeordneten Ausnehmungen 62 federelastische Eigenschaften, da die Stege zwischen den Ausnehmungen 62 sich bei axialer Krafteinwirkung auf das Dämpfungselement 36 elastisch verformen können. Dies ist in den Figuren 9a und 9b dargestellt. Das Dämpfungselement 36 wirkt ähnlich wie mehrere übereinander angeordnete Tellerfedern.

Im Gegensatz zum Stand der Technik, wo als Dämpfungselement ein plastisch verformbarer Körper eingesetzt wurde, wird nun erfindungsgemäß vorgeschlagen, ein federelastisches Dämpfungselement 36 zu verwenden, sodass bei einem Überlastereignis die auftretenden Lastkräfte elastisch abgefangen werden und das Dämpfungselement nach dem Überlastereignis im Wesentlichen unbeschädigt in seine ursprüngliche Form zurückkehrt.

Im Belastungsfall können von dem Endanschlag bzw. dem Dämpfungselement beispielsweise Kräfte in Höhe von 300-1500 Newton oder mehr bzw. Energien in der Größenordnung von 20-150 Joule aufgenommen werden. Die Federkraft des Dämpfungselements 36 kann z. B. über die Wahl des Werkstoffs und die Anzahl der Ausnehmungen 62 individualisiert werden.

Das elastische Dämpfungselement 36 verhindert somit, dass diese außerordentlichen Kräfte sich auf das Getriebe und letztendlich auf den Antriebsmotor auswirken und diese beschädigen.

In dem dargestellten Ausführungsbeispiel kann die Spindel 26 beispielsweise einen Durchmesser von etwa 8 Millimeter aufweisen, während das Dämpfungselement 36 einen Innendurchmesser von beispielsweise etwa 8,1 Millimeter und eine axiale Länge von beispielsweise 10 bis 30 Millimeter aufweist. Die Dicke des gestanzten Federstahlblechs liegt bevorzugt im Bereich zwischen 0,3 bis 1 Millimeter, wobei eine Dicke von 0,5 Millimeter besonders bevorzugt ist.

Die Federwirkung des Dämpfungselementes 36 bzw. die Federkraft ist auch gegeben durch den Durchmesser des Dämpfungselements 36, die axiale Länge des Dämpfungselements 36 und die Größe und Form sowie die Anzahl der Ausnehmungen 62 und der gewickelten Lagen.

In Figur 8 ist die Federfunktion des Dämpfungselements 36 erläutert. Wenn ein Kraftvektor in Pfeilrichtung 68 auf eine der Stirnseiten des Dämpfungselements 36 einwirkt, kommt es entlang der Biegelinie 70 zu einer Zusammendrückung der im Bereich dieser Biegelinie übereinander angeordneten federnden Metallquerschnitte, die sich zwischen den Aussparungen 62 ergeben. Damit werden miniaturisierte Biegefeder 69 gebildet, die in vertikaler Richtung längs der Biegelinien 70 übereinander gestapelt sind.

Die Figur 8 zeigt, dass eine Vielzahl von parallel zueinander angeordneten Biegelinie und 70 gebildet sind, wobei nur beispielhafte drei Biegelinien 70 dargestellt sind.

Die Figuren 8, 9a und 9b zeigen, dass jede Aussparung 62 bevorzugt knochenförmig ausgebildet ist. Die Knochenform ergibt sich gemäß den Figuren 8, und 9 dadurch, dass im Federstahlblech jeweils in horizontaler Erstreckung am Umfang gleichmäßig verteilte Aussparungen 62 gestanzt oder geschnitten sind, die in vertikaler Richtung auf Lücke zueinander versetzt sind. Jede Aussparung 62 wird endseitig von einem Halbkreisbogen 71 mit einem ersten größeren Durchmesser gebildet. Die beiden Halbkreisbögen 71 sind randseitig über jeweils einen Mittenbereich 72 miteinander verbunden. Die Randseiten des Mittenbereichs 72 liegen näher zusammen als vergleichsweise der Durchmesser der Halbkreisbögen 71.

Dadurch ergibt sich die charakteristische Knochenform. Die Figuren 9a und 9b zeigen die Verformung dieser Knochenstruktur beim Einwirken eines Kraftvektors in Pfeilrichtung 68. Dabei verformt sich der Mittenbereich 72 zu einem Mittenbereich 72' mit verringertem Abstand, wodurch die in Figur 8 beispielhaft dargestellten, in axialer Richtung übereinander gestapelten Biegefedern 69 gebildet werden.

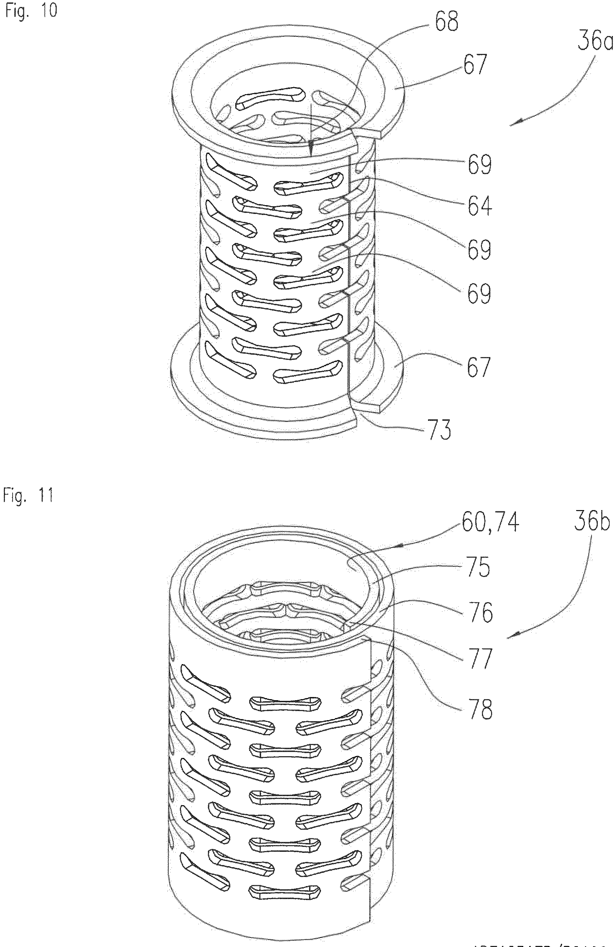

Die Figur 10 zeigt eine abgewandelte Ausführungsform eines Dämpfungselements 36a, bei dem die vorher im ersten Ausführungsbeispiel erwähnten, endseitig angeordneten, lose anliegenden Scheiben durch einen am Umfang umlaufenden Bördelrand 67 ersetzt sind. Der Bördelrand 67 ersetzt demnach die endseitigen, losen Scheiben und das ist vorteilhaft im Sinne einer Bauteileinsparung, weil keine Scheiben mehr benötigt werden. Durch den Bördelrand ist auch eine zuverlässige und symmetrische Krafteinleitung auf die Federstruktur des geschlitzten Dämpfungskörpers 36a gewährleistet, weil der Bördelrand 67 als abgekantetes Teil aus dem Federstahlmaterial des Dämpfungselementes 36a gebildet ist, während eine lose aufliegende Scheibe verkanten oder verrutschen kann.

Die Figur 10 zeigt, dass sich die beiden Ende des Bördelrands 67 im Bereich des vertikalen Spaltes 64 treffen und dort eine keilförmige Aussparung 73 ausbildet.

In diesem Beispiel ist der vertikale Spalt 64 offen dargestellt. Darauf ist die Erfindung jedoch nicht beschränkt. Es wurden in der allgemeinen Beschreibung verschiedene Ausführungsformen dargestellt, mit welchen Mitteln der Spalt 64 geschlossen oder überbrückt werden kann. Die im allgemeinen Teil beschriebenen Mittel zur Überbrückung des Spalts 64 sind auf alle Ausführungsformen der Erfindung anwendbar.

Dabei zeigt die Figur 11 eine dritte Ausführungsform eines Dämpfungselements 36 b, das aus einem Wickelkörper 74 besteht. Im gezeigten Ausführungsbeispiel besteht der Wickelkörper 74 aus einer in Innenwicklung 75 und einer die in Innenwicklung im Winkel von 360° abdeckenden Außenwicklung 76. Dabei wird es bevorzugt, wenn die vertikale Längsseite des inneren Wicklungsendes 77 etwa der vertikalen Längsseite des äußeren Wicklungsendes 78 mit radialem Abstand annähernd gegenüberliegt. Damit wird ebenfalls eine symmetrische Krafteinleitung auf das Dämpfungselement 36 b erreicht, ohne dass sich das Dämpfungselement bei Krafteinwirkung verformt, ausbeult oder gar bricht.

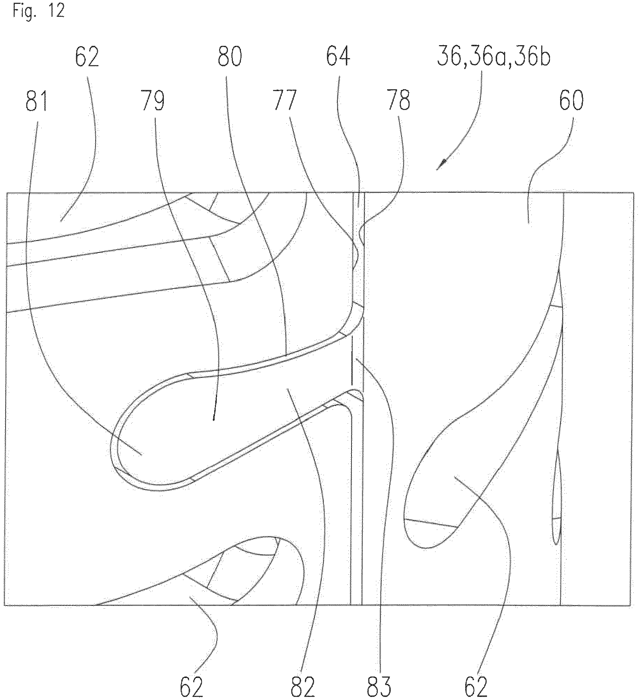

Die Figur 12 zeigt eine der verschiedenen Möglichkeiten zur Überbrückung des vertikalen Spaltes 64 mit einer Laschenstruktur, die aus einzelnen Verbindungslaschen 79 gebildet ist. Die Verbindungslaschen überbrücken den Spalt 64 nur stückweise. Dabei sind im Bereich eines am einen Ende des Stanzteils angeformte und aus dem Federstahlmaterial ausgestanzte Verbindungslaschen 79 vorhanden, die zueinander parallel sind und einen gegenseitigen Abstand aufweisen.

Die keulenförmigen Verbindunglaschen 79 greifen formschlüssig in zugeordnete keulenförmige Verbindungsausnehmungen 80 am gegenüberliegenden Teil ein. Eine solche Formschlussverbindung ist auch bei Kartonmaterialien bekannt, die als Teile eines Puzzles miteinander verbunden werden können. Eine solche Laschenstruktur ist eine zusätzliche Sicherung gegen radiales ungleichmässiges Aufbauchen oder Spreizen der Federhülse bei Einwirkung einer vertikalen Druckkraft. Es versteht sich von selbst, dass die Laschenstruktur auf sämtliche vorstehend beschriebenen Ausführungsbeispiele eines Dämpfungselements 36, 36a,36b anwendbar ist.

### Liste der Bezugszeichen

- 10: Spindelantriebsvorrichtung
- 12: Spindelgehäuse
- 14: Spindelachse
- 16a: Endstück
- 16b: Endstück
- 18: Motorgetriebeeinheit
- 20: Spindeleinheit
- 22a: Lagerelement
- 22b: Lagerelement
- 24: Führungsrohr
- 26: Spindel
- 28: Wälzlager
- 30: Schubrohr
- 32: Spindelmutter
- 32a: Stirnseite
- 33: Lageranordnung
- 34: Lagerelement
- 36: Dämpfungselement
- 38: Anlaufscheibe
- 40: Befestigungsscheibe
- 42: Antriebsmotor
- 44: Motorwelle
- 46: Getriebe
- 48: Getriebewelle
- 50: Hohlrad
- 52: Kupplung
- 54: Gehäuserohr
- 56: Schraubendruckfeder
- 58: Führungshülse
- 60: Stanzteil
- 62: Ausnehmung
- 64: Spalt
- 66: Längsmittelachse
- 67: Bördelrand
- 68: Pfeilrichtung (Kraftvektor)
- 69: Biegefeder
- 70: Biegelinie
- 71: Halbkreisbogen (von 62)
- 72: Mittenbereich, 72' (von 62)
- 73: Aussparung (von 67)
- 74: Wickelkörper
- 75: Innenwicklung
- 76: Außenwicklung
- 77: Wicklungsende innen
- 78: Wicklungsende außen
- 79: Verbindungslasche
- 80: Verbindungsausnehmung
- 81: Bogenteil (von 79)
- 82: Anschlussteil (von 79)
- 83: Ansatz (von 79)

## Patentansprüche

1. Spindelbaugruppe für eine Spindelantriebsvorrichtung (10) umfassend ein Schubrohr (30) und eine Spindelmutter (32), die am Schubrohr (30) drehfest angeordnet ist, wobei die Spindelmutter (32) mit einer Spindel (26) der Spindelantriebsvorrichtung (10) in Gewindeeingriff bringbar ist, und wobei auf der Spindel (26) ein Endanschlag für die Spindelmutter (32) angeordnet ist, **dadurch gekennzeichnet,**
**dass** der Endanschlag ein Dämpfungselement (36, 36a, 36b) umfasst, das aus einem Stanzteil (60) besteht, das hohlzylindrisch geformt ist und federelastische Eigenschaften aufweist.

2. Spindelbaugruppe nach Anspruch 1, **dadurch gekennzeichnet, dass** das Dämpfungselement (36, 36a, 36b) lose auf der Spindel angeordnet ist.

3. Spindelbaugruppe nach einem der Ansprüche 1 oder 2, **dadurch gekennzeichnet, dass** das Stanzteil (60) mehrere, sich in Umfangsrichtung des gerollten Stanzteils erstreckende längliche Ausnehmungen (62) aufweist, die in mehreren in Umfangsrichtung verlaufenden und versetzt zueinander angeordneten Reihen vorgesehen sind.

4. Spindelbaugruppe nach einem der Ansprüche 1 bis 3, **dadurch gekennzeichnet, dass** die Ausnehmungen (62) des Stanzteils (60) eine hantelförmige oder knochenförmige Ausgestaltung aufweisen.

5. Spindelbaugruppe nach einem der Ansprüche 1 bis 4, **dadurch gekennzeichnet, dass** der Endanschlag eine axial beweglich auf der Spindel angeordnete Anlaufscheibe (38) umfasst, die einen Anschlag für die Spindelmutter (32) ausbildet.

6. Spindelbaugruppe nach einem der Ansprüche 1 bis 5, **dadurch gekennzeichnet, dass** das Dämpfungselement (36, 36a, 36b) zwischen der Anlaufscheibe (38) und einem auf der Spindel angeordneten Lagerelement (34) angeordnet ist, wobei das Lagerelement (34) am Innenumfang des Schubrohres (30) gleitend anliegt.

7. Spindelbaugruppe nach einem der Ansprüche 1 bis 6, **dadurch gekennzeichnet, dass** die Anordnung des Endanschlags umfassend die Anlaufscheibe (38), das Dämpfungselement (36, 36b) und das Lagerelement (34) durch eine Befestigungsscheibe (40) auf der Spindel (26) fixiert ist.

8. Spindelantriebsvorrichtung (10) mit einer Spindelbaugruppe gemäß einem der Ansprüche 1 bis 7.

9. Spindelantriebsvorrichtung (10) nach Anspruch 8 zum Bewegen von Türen, Klappen oder Hauben eines Kraftfahrzeugs.

10. Spindelbaugruppe nach einem der Ansprüche 1 bis 9, **dadurch gekennzeichnet, dass** das als Endanschlag ausgebildete Dämpfungselement (36, 36a, 36b) als geschlitzte Federstahlhülse ausgebildet ist.

11. Spindelbaugruppe nach einem der Ansprüche 1 bis 10, **dadurch gekennzeichnet, dass** das Dämpfungselement (36a) mindestens an einer Stirnseite einen aus dem Federstahlmaterial abgekanteten Bördelrand (67) aufweist.

12. Spindelbaugruppe nach einem der Ansprüche 1 bis 11, **dadurch gekennzeichnet, dass** das Dämpfungselement (36b) als Wickelkörper (74) ausgebildet ist.

13. Spindelbaugruppe nach einem der Ansprüche 1 bis 12, **dadurch gekennzeichnet, dass** der vertikale Spalt (64) zwischen den einander gegenüberliegenden Längsseiten (77, 78) des Dämpfungselements (36, 36a, 36b) teilweise oder über die gesamte Länge offen ist.

14. Spindelbaugruppe nach einem der Ansprüche 1 bis 12, **dadurch gekennzeichnet, dass** der vertikale Spalt (64) zwischen den einander gegenüberliegenden Längsseiten (77, 78) des Dämpfungselements (36, 36b) mindestens stückweise durch Punktschweissungen überbrückt ist.

15. Spindelbaugruppe nach einem der Ansprüche 1 bis 12, **dadurch gekennzeichnet, dass** der vertikale Spalt (64) zwischen den einander gegenüberliegenden Längsseiten (77, 78) des Dämpfungselements (36b) mindestens stückweise mit Verbindungslaschen (79, 80) überbrückt ist.
